# EUROPEAN PATENT SPECIFICATION

(11) **EP 2 091 670 B1**
(45) Date of publication and mention of the grant of the patent: **25.01.2012**
(21) Application number: 07822695.8
(22) Date of filing: 19.11.2007
(51) Int. Cl.: B08B 9/08, B65G 1/04, B66F 9/06

(54) **AN APPARATUS AND A METHOD FOR CLEANING A STORAGE SYSTEM**
VORRICHTUNG UND VERFAHREN ZUR REINIGUNG EINES LAGERSYSTEMS
APPAREIL ET PROCÉDÉ DE NETTOYAGE D'UN SYSTÈME DE STOCKAGE

(30) Priority: 22.11.2006 EP 06024191
(43) Date of publication of application: 26.08.2009
(73) Proprietor: KJ Industries A/S, 6710 Esbjerg V (DK)
(72) Inventor: NIELSEN, Erik Vind, 6700 Esbjerg (DK)
(74) Representative: Inspicos A/S
(86) International application number: PCT/EP2007/062487
(87) International publication number: WO 2008/061951

(56) References cited:
- EP-A2- 1 035 044
- DE-A1- 3 222 977
- FR-A1- 2 403 969

## Description

### FIELD OF THE INVENTION

The present invention relates to an apparatus and a method for cleaning a storage system comprising a plurality of storage cells, in particular for cleaning a storage system in which the storage cells are arranged in a matrix pattern. The apparatus and method according to the invention are particularly suitable for cleaning a storage system for storing food products, e.g. meat.

### BACKGROUND OF THE INVENTION

There is sometimes a need to store products in a storage system. This may, e.g., be in order to intermediately store products between various processing steps, and/or in order to store finished products before distributing them. A storage system for this use may advantageously comprise a plurality of storage cells which may be accessed individually. The storage cells may be arranged in a matrix pattern, e.g. in a large rack, or in a number of large racks, positioned side-by-side in a storage building or a warehouse.

Such storage systems may be very large, i.e. they may comprise a vast number of storage cells. In order to be able to gain access to each of the storage cells for positioning a product in a storage cell or for retrieving a product, which has previously been positioned in a storage cell, in an easy manner, the storage system may be provided with a movable apparatus, e.g. in the form of a robot, which may be programmed to access a desired storage cell. Such a robot may advantageously be mounted in one or more rails on the floor, the rail(s) being arranged along a rack in such a manner that the robot may slide along the rack, i.e. in a substantially horizontal direction. The robot may further comprise a unit which is adapted to position products in the storage cells and to retrieve products from the storage cells. This unit is normally mounted on the robot in such a manner that it is movable in a substantially vertical direction. Thus, it is possible for the unit of the robot to access each of a plurality of storage cells positioned in a two-dimensional rack. The robot may be able to move the unit into a storage cell in order to position or retrieve an article. The robot may even be able to reach storage cells of two racks positioned adjacent and parallel to each other with an alley there between, the robot being mounted on a rail in the floor of the alley.

Storage may take place using suitable containers, such as crates, which are positioned in the storage cells. This is, e.g., the case in the food industry and in the pharmaceutical industry. The products may be stored packed or unpacked and in open or closed containers, respectively.

Due to hygiene requirements such storage systems must be cleaned and, in some cases, disinfected on a regular basis. This is of particular importance in the food industry. So far such cleaning has been performed manually. This is very cumbersome, time consuming and expensive. Furthermore, in order for the cleaning personnel to be able to reach each of the storage cells it is necessary to use ladders and/or movable platforms. The cleaning personnel will also have to bring various cleaning articles, such as spray lances, brushes, cleaning material, such as soap and/or disinfectant, etc. It may therefore be necessary to provide sufficient space between adjacent racks to allow cleaning personnel to climb or be lifted to each of the storage cells in a safe manner, while carrying the necessary articles along with them. Thereby less space will be available for storing products, and this is a further disadvantage.

EP 1 035 044 A2 discloses a device for positioning a vessel at a stationary item, e.g. a storage system comprising a plurality of storage cells arranged in a matrix pattern. The vessel is movable along a predetermined path along the stationary item. The item is provided with encoded markers arranged at predetermined distances. Optical sensors arranged on the vessel are adapted to read the encoded markers, and thereby the position of the vessel can be determined. Brushes or the like may be mounted on the vessel for cleaning the markers as the vessel passes along the stationary item.

### SUMMARY OF THE INVENTION

It is thus an object of the invention to provide an apparatus which allows for cleaning of a storage system comprising a plurality of storage cells while avoiding or considerably reducing the need for manual labour.

It is a further object of the invention to provide a method for cleaning a storage system comprising a plurality of storage cells in such a manner that the need for manual labour is avoided or at least considerably reduced.

It is an even further object of the invention to provide a storage system having a plurality of storage cells arranged in a matrix pattern, in which it is possible to store an increased number of articles, while allowing for sufficient cleaning of the storage system.

According to a first aspect of the invention the above and other objects are fulfilled by providing an apparatus for positioning and retrieving articles in/from a storage system comprising a plurality of storage cells arranged in a matrix pattern, the apparatus comprising:
- a positioning/retrieval part adapted to position/retrieve an article in/from a selected storage cell,
- means for moving the positioning/retrieval part along at least two independent directions, the positioning/retrieval part thereby being capable of reaching each of the storage cells of the storage system in order to position/retrieve an article in/from a selected storage cell, and
- a cleaning unit comprising one or more cleaning parts, said cleaning unit being movable along with the positioning/retrieval part, the cleaning unit thereby being adapted to selectively perform cleaning operations at least at interior parts of each of the plurality of storage cells of the storage system.

In the present context the term 'storage system' should preferably be interpreted as described above, i.e. as one or more racks comprising a plurality of storage cells. It could be a complete storage site, e.g. delimited by a storage building or a warehouse, or it may be part of a complete storage site, e.g. a single rack or a few racks of a storage site comprising a plurality of racks.

The plurality of storage cells are arranged in a matrix pattern. This may be obtained by arranging the storage cells in a rack (forming a two-dimensional matrix pattern) or in a plurality of racks (forming a three-dimensional matrix pattern).

The positioning/retrieval part is a part of the apparatus which is adapted to position or retrieve an article in/from a given storage cell when the positioning/retrieval part is positioned in or adjacent to that storage cell. The specific design of the positioning/retrieval part depends on the kind and shape of the articles being stored in the storage system, and on the design of the storage cells. Thus, the positioning/retrieval part may comprise gripping means for gripping an article while positioning it in or retrieving it from a storage cell. Alternatively or additionally, the positioning/retrieval part may comprise a platform which can support an article during positioning or retrieval. This is particularly suitable if the stored articles are carried in containers of uniform size and shape, and which can be supported in the storage cells by small carrying units, the carrying units being arranged in such a manner that the platform is allowed to enter beneath a storage cell. Such a platform may advantageously be operated as follows. When an article is to be positioned in a selected storage cell it is initially positioned on the platform. The platform is then moved to a position immediately adjacent to the selected storage cell in a manner which will be described further below. Then the platform is moved in a direction towards the selected storage cell at a level above a level defined by the carrying units. Subsequently, the platform is moved in a downwards direction until the article is supported by the carrying unit and is no longer supported by the platform. The platform is then retracted from the storage system. When an article is to be retrieved from a selected storage cell, the steps described above are performed in a reverse sequence.

The means for moving the positioning/retrieval part may advantageously be a robot as described above. In this case the positioning/retrieval part is movable along a substantially horizontal direction, e.g. by means of a rail mounted on the floor or on the ceiling, and along a substantially vertical direction by means of a lift or crane arrangement. Thereby the positioning/retrieval part can be positioned adjacent to each of a plurality of storage cells arranged in a rack. It should be noted that the two directions do not need to be perpendicular to each other as long as they are independent, i.e. the two directions in combination define a plane spanned by vectors arranged along the directions. The positioning/retrieval part may further be movable along a third direction being at least substantially perpendicular to the directions defined above. In this case the positioning/retrieval part is further movable along a direction which is at least substantially normal to a plane spanned by vectors arranged along the two previously defined directions. This allows the positioning/retrieval part to enter a storage cell when the positioning/retrieval part has been positioned adjacent to that storage cell.

The cleaning unit is adapted to perform various cleaning operations, i.e. it is capable of cleaning the storage system. This will be described in further details below. The cleaning unit is movable along with the positioning/retrieval unit. Since the positioning/retrieval unit, as explained above, is movable in such a manner that it can be positioned adjacent to and/or enter each of the storage cells, the cleaning unit can also be positioned adjacent to and/or enter each of the storage cells. Accordingly, the cleaning unit can perform cleaning operations in each of the storage cells. In particular, the cleaning unit can at least perform cleaning operations in interior parts of a selected storage cell, i.e. in parts where articles are actually stored, and where cleaning is therefore essential. It should, however, be understood that the cleaning unit may additionally be capable of performing cleaning operations on exterior parts of a selected storage cell. Thus, the storage cells can be individually cleaned, at least in interior parts, by means of the cleaning unit, i.e. with no or only little manual effort. Accordingly, the storage system can be cleaned in an automatic manner rather than in a manual manner, and the disadvantages described above are thereby avoided. In particular, the cleaning becomes more cost effective and less cumbersome, the necessary space between racks may even be reduced to only allow a robot to fit in, and the space available for storing articles may thereby be increased, thereby increasing the number of stored articles per unit area of the storage site. This is very advantageous.

The cleaning unit may be mounted on or form part of the positioning/retrieval part. According to this embodiment the cleaning unit may form an integral part of the positioning/retrieval part, i.e. it may be manufactured along with the positioning/retrieval part. Alternatively, the cleaning unit may form a separate unit which can be mounted on the positioning/retrieval unit, either detachably or in a permanent manner. In the case that the cleaning unit is mounted on the positioning/retrieval unit in a detachable manner, the cleaning, unit may be mounted when it is desired to perform cleaning operations on the storage system, and when the cleaning operations have been completed, the cleaning unit may be detached, i.e. it will not be present on the positioning/retrieval part during normal operation of the apparatus.

As an alternative, the cleaning unit may be a separate unit forming part of or being mounted on, permanently or detachably, another part of the apparatus. However, it should be noted that the cleaning unit should be movable along with the positioning/retrieval part, the cleaning unit thereby being capable of reaching each of the storage cells of the storage system.

The cleaning part(s) may be selected from the group consisting of: fixed nozzles, movable nozzles, multi nozzle units, fixed brushes, movable brushes, dosing units, drying units, suction units, scrapers, and wiping units.

It should be noted that cleaning parts from two or more of these groups may be selected.

Nozzles may be for providing water and/or for providing waterborne or airborne cleaning material, such as soap, disinfectant, etc. The nozzles may be fixed, i.e. they may be mounted in such a manner that they spray in one direction only. Fixed nozzles may, e.g., provide a spraying pattern which forms a jet, a two-dimensional 'wall', has a conical shape, or any other suitable pattern. Fixed nozzles should be interpreted as nozzles which are fixed relatively to the cleaning unit, and it should be understood that such nozzles may be moved along with the cleaning unit.

Alternatively, the nozzles may be movable, i.e. they may be mounted in such a manner that they are movable in order to form a desired spraying pattern, e.g. a conical pattern. Movable nozzles may be advantageous if it is desired to target surfaces which are not readily accessible from the cleaning unit. The movable nozzles may be rotatable and/or linearly movable.

Nozzles may also be in the form of multi nozzle units. In this case a plurality of nozzles, fixed and/or movable, may be mounted on a nozzle head, thereby providing a desired spraying pattern.

As an alternative to nozzles mounted on the cleaning unit, water and/or cleaning material may be provided by means of nozzles fixed on the storage system and/or directly on the building construction.

Brushes may be used for scrubbing selected parts of the storage system, e.g. surfaces. The brushes may be fixed, i.e. fixed relatively to the cleaning unit, in which case the brushes are only movable along with the cleaning unit, in which case a scrubbing action is performed by moving the entire cleaning unit. Alternatively, the brushes may be movable, e.g. rotatable or linearly movable, in which case a scrubbing operation may be performed by moving the brushes relatively to the cleaning unit.

Dosing units are units which are adapted to dose cleaning material, such as soap, disinfectant, etc., and/or water. The dosing units may be connected to or comprise nozzles as described above for delivering the dosed cleaning material or water. The dosing units are also preferably connected to a source. Thus, in the case that the dosing units are dosing a specific kind of cleaning material, they should be connected to a reservoir or container containing the relevant kind of cleaning materials. In the case that the dosing units are dosing water, they should be connected to a water supply, e.g. a tap.

Drying units are units which are adapted to provide drying for the storage system when cleaning operations involving water have been performed. Drying units may advantageously comprise blowers supplying a stream of hot or cold air onto surfaces of the storage system. Such blowers may be fixed or movable as defined above.

Suction units are units which are adapted to provide suction in order to suck up dirt, leftovers, etc. in the storage system. Thus, the suction units may function as a vacuum cleaner.

Scrapers are parts which are adapted to scrape off leftovers or dirt which stick to surfaces of the storage system.

Wiping units are units which may be used for wiping surfaces of the storage system. The wiping units may, e.g., be or comprise cloths, mops, etc.

It should be noted that other cleaning parts than those mentioned above could be envisaged.

The cleaning unit may be adapted to simultaneously perform cleaning operations on two or more storage cells. According to this embodiment, the cleaning unit may be designed in such a manner that, when positioned in an appropriate manner, it may enter two or more storage cells simultaneously. The storage cells may be positioned adjacent to each other, e.g. side-by-side or one above the other. Alternatively, they may be positioned in separate racks facing each other with an alley there between.

The cleaning unit may be detachably mounted on the apparatus. As mentioned above, the cleaning unit may in this case be mounted on the apparatus during cleaning and detached during normal operation.

The apparatus may advantageously be positioned in or form part of a storage system comprising a plurality of storage cells arranged in a matrix pattern, and the storage system may be adapted to store food products.

According to a second aspect of the invention the above and other objects are fulfilled by providing a method of cleaning a storage system comprising a plurality of storage cells arranged in a matrix pattern, the method comprising the steps of:
- selecting a moving pattern for a cleaning unit,
- selecting a cleaning operation pattern for one or more cleaning parts of the cleaning unit, and
- moving and operating the cleaning unit in accordance with the selected moving pattern and the selected cleaning operation pattern, thereby obtaining a desired kind of cleaning in selected desired parts of the storage system.

It should be noted that a skilled person would readily recognise that any feature described in combination with the first aspect of the invention may equally be combined with the second aspect of the invention, and vice versa.

The method according to the second aspect of the invention may advantageously be performed using an apparatus according to the first aspect of the invention. The method according to the second aspect of the invention offers cleaning of the storage system in an automatic manner, and the advantages described above with reference to the first aspect of the invention are thereby obtained.

The step of selecting a moving pattern may comprise selecting a velocity pattern for the cleaning unit. The velocity pattern may define a constant velocity by which the cleaning unit should be moved. Alternatively, it may define that the cleaning unit should be moved by varying velocities depending on the position along the movement path. Thus, the velocity pattern may define that the cleaning unit should be moved relatively slowly past a storage cell which is to be cleaned, while cleaning operations are performed, and that the cleaning unit should be moved somewhat faster when being moved from one storage cell to the next. The velocity pattern may even specify that the cleaning unit should be kept immovable while cleaning operations are performed on a storage cells which the cleaning unit is positioned adjacent to.

Alternatively or additionally, the step of selecting a moving pattern may comprise selecting a pattern which leads the cleaning unit past a plurality of selected storage cells. At least some of the storage cells being passed in this manner are preferably cleaned. According to this embodiment, the moving pattern specifies directions of movement for the cleaning unit.

Alternatively or additionally, the step of selecting a moving pattern may further comprise selecting a pattern in which the cleaning unit enters at least some of the selected storage cells. According to this embodiment, the moving pattern preferably specifies a path which moves the cleaning unit to a position adjacent to a selected storage cell. When the cleaning unit has been moved to such a position, it is moved in a perpendicular direction into the selected storage cell, and cleaning operations are then performed on that storage cells before the cleaning unit is retracted and moved to a position adjacent to the next storage cell.

The selected storage cells may be positioned adjacent to each other in the matrix pattern. In this case the selected storage cells form a 'sub-matrix' of storage cells. Alternatively, the selected storage cells may be arranged in any other suitable manner. It may, thus, be desired to clean each storage cell in every second row, or every third storage cell in each row, or the storage cells may be selected in any other suitable manner.

Thus, the selected storage cells may form a limited part of the storage system, such as a part known to be particularly dirty, or needing a special kind of cleaning.

The step of selecting a cleaning operation may comprise selecting one or more cleaning sequences from a plurality of cleaning sequences. According to this embodiment, the cleaning operation may be composed by means of standard cleaning sequences, and a desired cleaning operation may be obtained by selecting one or more such standard cleaning sequences and putting them together in a desired order.

The step of selecting a cleaning operation may comprise selecting one or more cleaning operations from the group consisting of: kind of applied cleaning material, amount of applied cleaning material, pattern of applied water, pressure of applied water, amount of applied water, temperature of applied water, drying, scrubbing pattern, scrubbing means, suction pattern, and suction means.

As described above, applied cleaning materials may be soap, disinfectant, etc. A cleaning operation could be to select which kind of cleaning material should be applied at a specific point during the cleaning operation, and/or the amount of cleaning material supplied at a specific point during the cleaning operation.

Other cleaning operations could relate to applied water, e.g. the pressure, amount, and/or temperature of water applied at a specific point during the cleaning operation. Alternatively or additionally, the pattern of the applied water could be specified, e.g. a jet, a two-dimensional 'wall', a conical pattern, a moving pattern, etc., as well as when water should be applied, and when no water should be applied.

Drying may be provided by means of one or more blowers as described above, and this operation may specify when drying should be provided, in which direction, at which pressure and/or at which temperature the blower should provide drying.

Scrubbing may specify when scrubbing should be applied, the kind of scrubbing means, such as fixed or moving brushes, wiping means, the scrubbing pattern, such as rotating, linearly moving, etc.

Suction may specify the kind of suction means, e.g. a vacuum cleaner or the like and/or the suction force applied. The suction means may comprise a movable inlet, in which case a suction pattern may be defined.

It should be noted that other kinds of cleaning operations than the ones mentioned above could be envisaged.

The step of selecting a cleaning operation may comprise selecting a cleaning operation which provides cleaning of interior parts of at least one storage cell. As described above, such a cleaning operation makes it possible to clean the storage system, in particular the parts of the storage system where articles are stored, in an automatic manner.

The step of moving may comprise moving the cleaning unit along with a positioning/retrieval part adapted to position/retrieve an article in/from a selected storage cell. In this case the cleaning unit may be mounted on or form part of the positioning/retrieval unit. This has already been described in details above.

The step of moving may comprise moving the cleaning unit along a meandering path. In this case a large number of storage cells may be reached while the distance which the cleaning unit must travel is kept at a minimum. Alternatively, the cleaning unit may be moved along any other suitable path.

### BRI EF DESCRI PTI ON OF THE DRAWINGS

The invention will now be described in details with reference to the accompanying drawings in which
Fig. 1 is a side view of a storage system comprising a plurality of storage cells arranged in a matrix pattern, and an apparatus for positioning and retrieving articles in/from the storage system,
Fig. 2 is a view from above of the storage system of Fig. 1,
Fig. 3 is a side view of a part of the storage system of Fig. 1,
Fig. 4 is a side view of a positioning/retrieval part of an apparatus according to an embodiment of the invention,
Fig. 5 is a side view of the storage system of Fig. 1 and illustrating part of a moving pattern in accordance with an embodiment of the invention, and
Fig. 6 is a view from above of the storage system of Fig. 2 and illustrating part of a moving pattern in accordance with an embodiment of the invention.

### DETAILED DESCRI PTI ON OF THE DRAWINGS

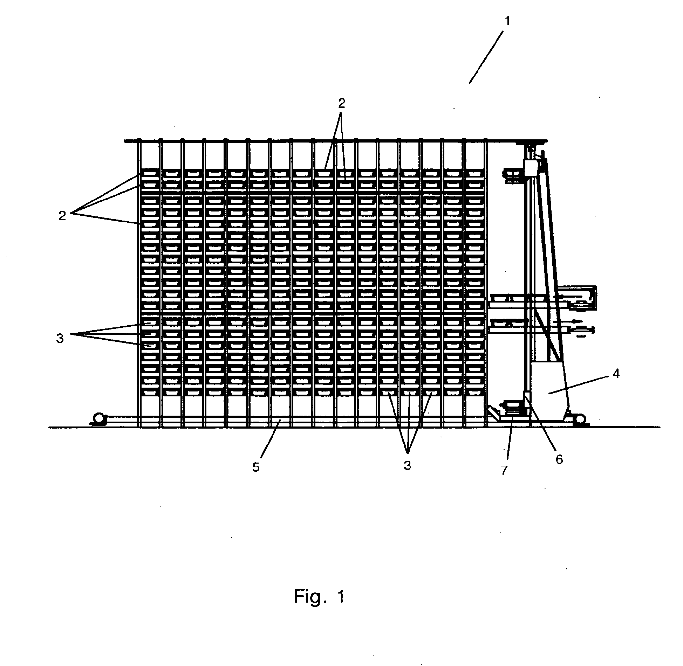

Fig. 1 is a side view of a storage system 1 comprising a plurality of storage cells 2 arranged in a matrix pattern. In the storage system 1 of Fig. 1, the storage cells 2 are arranged in a large rack, and each of the storage cells 2 is provided with a crate 3 for carrying an article being stored in the corresponding storage cell 2.

The storage system 1 is further provided with an apparatus 4 for positioning and retrieving articles in/from the storage system 1. The apparatus 4 is movable in a substantially horizontal direction along the rack by means of rails 5. Thereby it is possible to position the apparatus 4 at a desired location along this direction. The apparatus 4 is provided with lift means 6 adapted to move a positioning/retrieval part 7 along a substantially vertical direction. Thus, by moving the apparatus 4 along the rails 5 and operating the lift means 6 in an appropriate manner, it is possible to position the positioning/retrieval part 7 adjacent to any of the storage cells 2 of the storage system 1. As described above, an article may thereby be positioned in or retrieved from that storage cell 2.

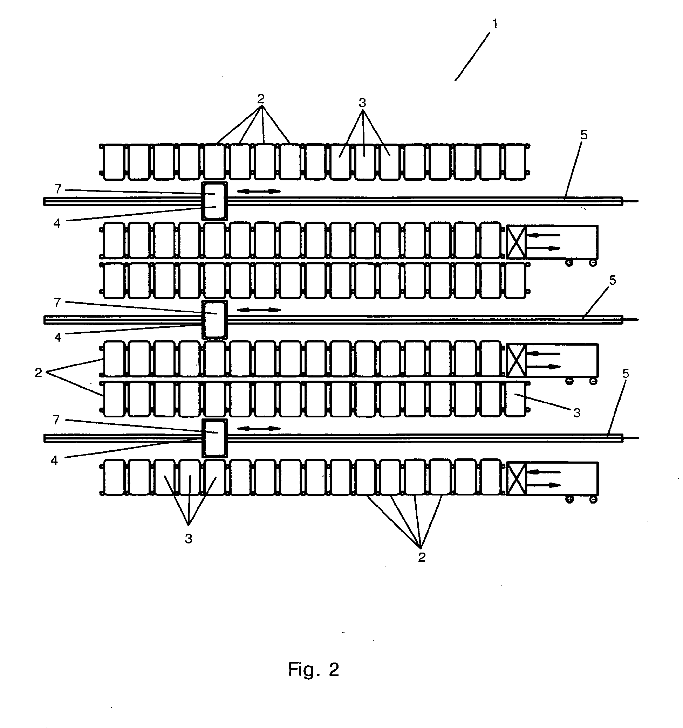

Fig. 2 is a view from above of the storage system 1 of Fig. 1 , illustrating that the storage system 1 comprises six racks identical to the rack shown in Fig. 1. Furthermore, the storage system is provided with three apparatuses 4, each apparatus 4 being capable of gaining access to storage cells 2 positioned in two adjacent racks.

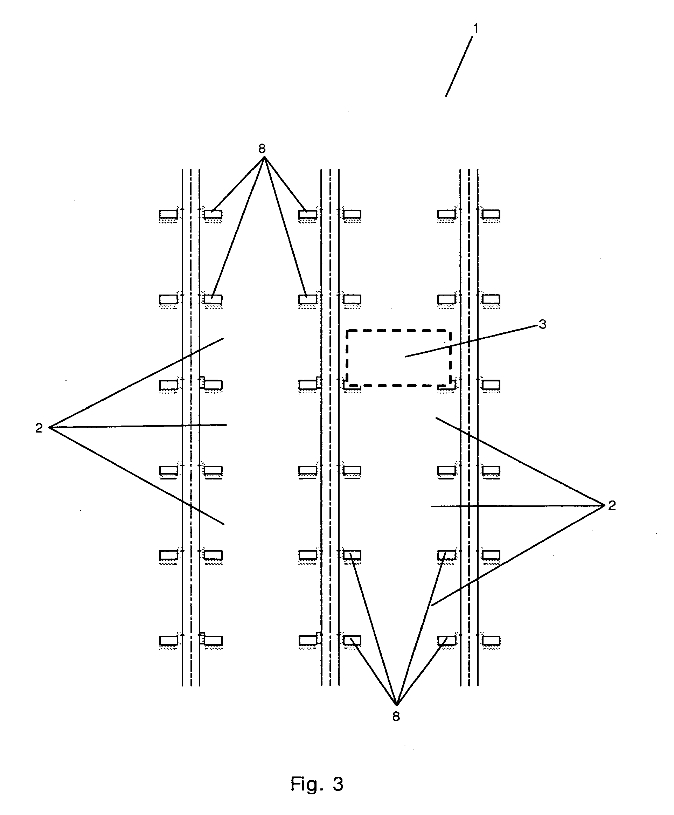

Fig. 3 is a side view of a part of the storage system 1 of Fig. 1. In the part of the storage system 1 shown in Fig. 3 the crates 3 have been removed. However, the position of the crates 3 in the storage cells 2 during normal operation of the storage system 1 is illustrated by a dotted line. Each storage cell 2 is provided with a set of supporting surfaces 8 adapted to support and hold a crate 3 as illustrated by the dotted line. This has been described in detail above. It should be noted that when the storage system 1 is being cleaned, there is preferably no crates 3 present in the storage system 1, or at least in the part being cleaned. Thereby it is possible to gain access to all the surfaces of the storage system, in particular in each of the storage cells 2, in such a manner that sufficient and appropriate cleaning can be provided.

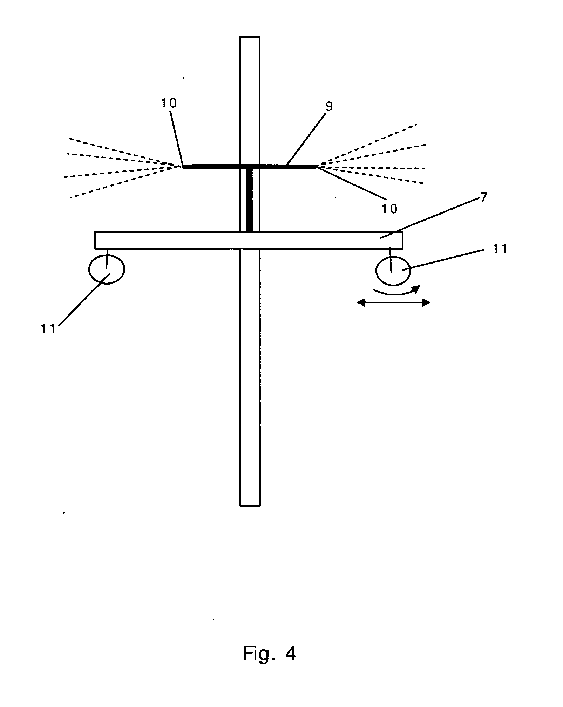

Fig. 4 is a side view of a positioning/retrieval part 7 of an apparatus according to an embodiment of the invention. A nozzle arrangement 9 comprising two nozzles 10 is mounted on the positioning/retrieval part 7. Water and/or one or more relevant cleaning materials can be delivered via the nozzle arrangement 9, thereby providing water and/or cleaning material to a part of the storage system where the positioning/retrieval part 7 is positioned.

The positioning/retrieval part 7 is further provided with two rotating brushes 11 which may be used for scrubbing a part of the storage system where the positioning/retrieval part 7 is positioned.

The nozzle arrangement 9 and the rotating brushes 11 in combination form a cleaning unit mounted on the positioning/retrieval part 7, and thereby being movable along with it. Thus, if the positioning/retrieval part 7 is moved to a position adjacent to a selected storage cell as described above with reference to Fig. 1, the nozzle arrangement 9 and the brushes 11 can perform cleaning operations on that storage cell. This may advantageously be done by spraying water and/or one or more relevant cleaning materials onto surfaces of the selected storage cell by means of the nozzle arrangement 9, and subsequently scrubbing the surfaces by means of the rotating brushes 11. At least part of this cleaning operation may be performed while the cleaning unit, and optionally the entire positioning/retrieval part 7, has entered the storage cell.

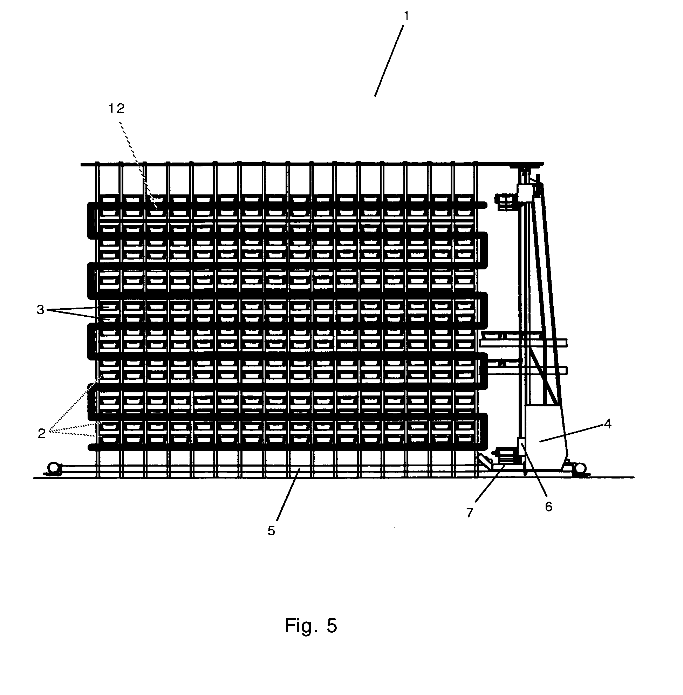

Fig. 5 is a side view of the storage system 1 of Fig. 1. In Fig. 5 part of a moving pattern 12 for the positioning/retrieval part 7 is illustrated. The illustrated moving·pattern 12 forms a meandering path which leads the positioning/retrieval part 7 past every second row of storage cells 2 in the matrix pattern. In the case that the cleaning unit is deigned in such a manner that it is capable of simultaneously performing cleaning operations on two storage cells 2, the moving pattern 12 illustrated in Fig. 5 could result in each of the storage cells 2 of the storage system 1 being cleaned.

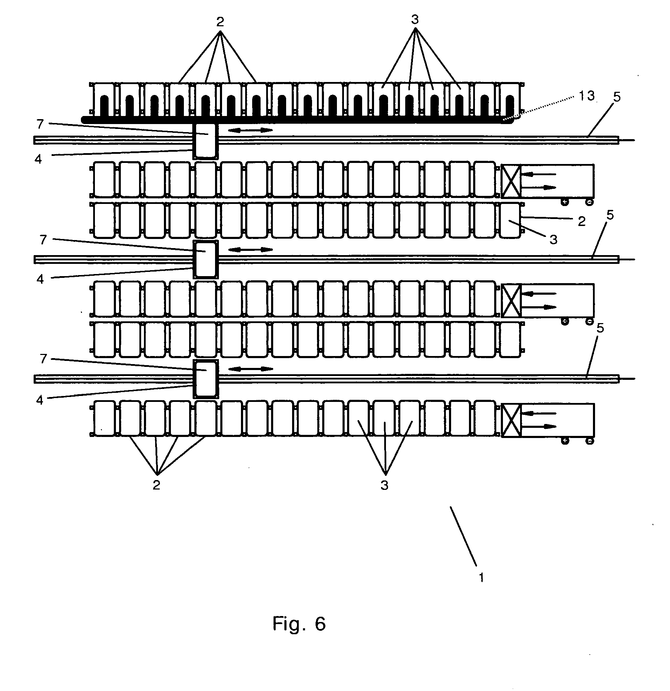

Fig. 6 is a view from above of the storage system of Fig. 2 and illustrating part of a moving pattern 13 for the positioning/retrieval part 7 in accordance with an embodiment of the invention. The moving pattern 13 leads the positioning/retrieval part 7 into each of the storage cells 2 which is passed by the positioning/retrieval part 7. Thereby cleaning operations are performed on the storage cells 2 while the positioning/retrieval part 7 has entered the storage cells 2.

As mentioned above, it should be noted that during cleaning the crates 3 will normally not be present in the storage system 1. However, for the sake of clarity they are shown in Figs. 5 and 6.

## Claims

1. An apparatus (4) for positioning and retrieving articles in/from a storage system (1) comprising a plurality of storage cells (2) arranged in a matrix pattern, the apparatus (4) comprising:
- a positioning/retrieval part (7) adapted to position/retrieve an article in/from a selected storage cell (2),
- means (6) for moving the positioning/retrieval part (7) along at least two independent directions, the positioning/retrieval part (7) thereby being capable of reaching each of the storage cells (2) of the storage system (1) in order to position/retrieve an article in/from a selected storage cell (2), and
- a cleaning unit (9, 10, 11) comprising one or more cleaning parts, said cleaning unit (9, 10, 11) being movable along with the positioning/retrieval part (7),
**characterized in that** the cleaning unit (9, 10, 11) is thereby adapted to selectively perform cleaning operations at least at interior parts of each of the plurality of storage cells (2) of the storage system (1).

2. An apparatus (4) according to claim 1, wherein the cleaning unit (9, 10, 11) is mounted on or forms part of the positioning/retrieval part (7).

3. An apparatus (4) according to claim 1 or 2, wherein the cleaning part(s) is/are selected from the group consisting of: fixed nozzles, movable nozzles, multi nozzle units, fixed brushes, movable brushes, dosing units, drying units, suction units, scrapers and wiping units.

4. An apparatus (4) according to any of the preceding claims, wherein the cleaning unit (9, 10, 11) is adapted to simultaneously perform cleaning operations on two or more storage cells (2).

5. An apparatus (4) according to any of the preceding claims, wherein the cleaning unit (9, 10, 11) is detachably mounted on the apparatus (4).

6. A storage system (1) comprising a plurality of storage cells (2) arranged in a matrix pattern and an apparatus (4) according to any of the preceding claims.

7. A storage system (1) according to claim 6, said storage system (1) being adapted to store food products.

8. A method of cleaning a storage system (1) comprising a plurality of storage cells (2) arranged in a matrix pattern,
**characterized in that** the method comprises the steps of:
- selecting a moving pattern for a cleaning unit (9, 10, 11),
- selecting a cleaning operation pattern for one or more cleaning parts of the cleaning unit (9, 10, 11), and
- moving and operating the cleaning unit (9, 10, 11) in accordance with the selected moving pattern and the selected cleaning operation pattern, thereby obtaining a desired kind of cleaning in selected desired parts of the storage system (1).

9. A method according to claim 8, wherein the step of selecting a moving pattern comprises selecting a velocity pattern for the cleaning unit (9, 10, 11).

10. A method according to claim 8 or 9, wherein the step of selecting a moving pattern comprises selecting a pattern which leads the cleaning unit (9, 10, 11) past a plurality of selected storage cells (2).

11. A method according to claim 10, wherein the step of selecting a moving pattern further comprises selecting a pattern in which the cleaning unit (9, 10, 11) enters at least some of the selected storage cells (2).

12. A method according to claim 10 or 11, wherein the selected storage cells (2) are positioned adjacent to each other in the matrix pattern.

13. A method according to any of claims 10-12, wherein the selected storage cells (2) form a limited part of the storage system (1).

14. A method according to any of claims 8-13, wherein the step of selecting a cleaning operation comprises selecting one or more cleaning sequences from a plurality of cleaning sequences.

15. A method according to any of claims 8-14, wherein the step of selecting a cleaning operation comprises selecting one or more cleaning operations from the group consisting of: kind of applied cleaning material, amount of applied cleaning material, pattern of applied water, pressure of applied water, amount of applied water, temperature of applied water, drying, scrubbing pattern, scrubbing means, suction pattern, and suction means.

16. A method according to any of claims 8-14, wherein the step of selecting a cleaning operation comprises selecting a cleaning operation which provides cleaning of interior parts of at least one storage cell (2).

17. A method according to any of claims 8-16, wherein the step of moving comprises moving the cleaning unit (9, 10, 11) along with a positioning/retrieval part (7) adapted to position/retrieve an article in/from a selected storage cell (2).

18. A method according to any of claims 8-17, wherein the step of moving comprises moving the cleaning unit (9, 10, 11) along a meandering path.

## Patentansprüche

1. Vorrichtung (4) zum Positionieren und Entnehmen von Artikeln in/aus einem Lagersystem (1) mit einer Anzahl von Lagerzellen (2), die in einem Matrixmuster angeordnet sind, wobei die Vorrichtung
- über ein Positionierungs/Entnahmeteil (7), das zum Positionieren/Entnehmen eines Artikels in/aus einer ausgewählten Lagerzelle (2) eingerichtet ist,
- über Mittel (6) zum Bewegen des Positionierungs/Entnahmeteils (7) in wenigstens zwei unabhängige Richtungen, wobei das Positionierungs/Entnahmeteil (7) dadurch in der Lage ist, jede der Lagerzellen (2) des Lagersystems (1) zu erreichen, um einen Artikel in/aus einer ausgewählten Lagerzelle (2) zu positionieren/entnehmen, und
- über eine Reinigungseinheit (9, 10, 11) verfügt, die ein oder mehrere Reinigungsteile aufweist, wobei die Reinigungseinheit (9, 10, 11) zusammen mit dem Positionierungs/Entnahmeteil (7) bewegbar ist,
**dadurch gekennzeichnet, dass** die Reinigungseinheit (9, 10, 11) somit dazu eingerichtet ist, selektiv Reinigungsvorgänge wenigstens an Innenteilen von jeder der Anzahl von Lagerzellen (2) des Lagersystems (1) durchzuführen.

2. Vorrichtung (4) nach Anspruch 1, bei der die Reinigungseinheit (9, 10, 11) an dem Positionierungs/Entnahmeteil (7) angebracht ist oder ein Teil davon ist.

3. Vorrichtung (4) nach Anspruch 1 oder 2, bei der das/die Reinigungsteil(e) aus der Gruppe ausgewählt ist/sind, die aus feststehenden Düsen, beweglichen Düsen, Mehrfachdüseneinheiten, feststehenden Bürsten, beweglichen Bürsten, Dosiereinheiten, Trockeneinheiten, Saugeinheiten, Schabern und Wischeinheiten besteht.

4. Vorrichtung (4) nach einem der vorangehenden Ansprüche, bei der die Reinigungseinheit (9, 10, 11) dazu eingerichtet ist, gleichzeitig an zwei oder mehr Lagerzellen (2) Reinigungsvorgänge durchzuführen.

5. Vorrichtung (4) nach einem der vorangehenden Ansprüche, bei der die Reinigungseinheit (9, 10, 11) lösbar an der Vorrichtung (4) angebracht ist.

6. Lagersystem (1), das eine Anzahl von Lagerzellen (2), die in einem Matrixmuster angeordnet sind, und eine Vorrichtung (4) nach einem der vorangehenden Ansprüche aufweist.

7. Lagersystem (1) nach Anspruch 6, wobei das Lagersystem (1) dazu eingerichtet ist, Lebensmittel zu lagern.

8. Verfahren zum Reinigen eines Lagersystems (1) mit einer Anzahl von Lagerzellen (2), die in einem Matrixmuster angeordnet sind, **dadurch gekennzeichnet, dass** das Verfahren die Schritte
- Auswählen eines Bewegungsmusters für eine Reinigungseinheit (9,10,11),
- Auswählen eines Reinigungsvorgangsmusters für ein oder mehrere Reinigungsteile der Reinigungseinheit (9, 10, 11) und
- Bewegen und Betreiben der Reinigungseinheit (9, 10, 11) gemäß dem ausgewählten Bewegungsmuster und dem ausgewählten Reinigungsvorgangsmusters aufweist, wodurch eine gewünschte Art der Reinigung in ausgewählten gewünschten Teilen des Lagersystems (1) erreicht wird.

9. Verfahren nach Anspruch 8, bei dem der Schritt des Auswählens eines Bewegungsmusters das Auswählen eines Geschwindigkeitsmusters für die Reinigungseinheit (9, 10, 11) aufweist.

10. Verfahren nach Anspruch 8 oder 9, bei dem der Schritt des Auswählens eines Bewegungsmusters das Auswählen eines Musters aufweist, das die Reinigungseinheit (9, 10, 11) an einer Anzahl von ausgewählten Lagerzellen (2) vorbeiführt.

11. Verfahren nach Anspruch 10, bei dem der Schritt des Auswählens eines Bewegungsmusters weiterhin das Auswählen eines Musters aufweist, bei dem die Reinigungseinheit (9, 10, 11) in wenigstens einige der ausgewählten Lagerzellen (2) eintritt.

12. Verfahren nach Anspruch 10 oder 11, bei dem die ausgewählten Lagerzellen (2) nebeneinander in dem Matrixmuster angeordnet sind.

13. Verfahren nach einem der Ansprüche 10-12, bei dem die ausgewählten Lagerzellen (2) einen begrenzten Teil des Lagersystems (1) bilden.

14. Verfahren nach einem der Ansprüche 8-13, bei dem der Schritt des Auswählens eines Reinigungsvorgangs das Auswählen einer oder mehrerer Reinigungsabfolgen aus einer Anzahl von Reinigungsabfolgen aufweist.

15. Verfahren nach einem der Ansprüche 8-14, bei dem der Schritt des Auswählens eines Reinigungsvorgangs das Auswählen einer oder mehrerer Reinigungsvorgänge aus der Gruppe aufweist, die aus der Art des verwendeten Reinigungsmaterials, der Menge des verwendeten Reinigungsmaterials, des Musters des verwendeten Wassers, des Drucks des verwendeten Wassers, der Menge des verwendeten Wassers, der Temperatur des verwendeten Wassers, des Trocknens, des Scheuermusters, der Scheuermittel, des Saugmusters und der Saugmittel besteht.

16. Verfahren nach einem der Ansprüche 8-14, bei dem der Schritt des Auswählens eines Reinigungsvorgangs das Auswählen eines Reinigungsvorgangs aufweist, der das Reinigen von Innenteilen wenigstens einer Lagerzelle (2) vorsieht.

17. Verfahren nach einem der Ansprüche 8-16, bei dem der Schritt des Bewegens das Bewegen der Reinigungseinheit (9, 10, 11) zusammen mit einem Positionierungs/Entnahmeteil (7) aufweist, das dazu eingerichtet ist, einen Artikel in/aus einer ausgewählten Lagerzelle (2) zu positionieren/entnehmen.

18. Verfahren nach einem der Ansprüche 8-17, bei dem der Schritt des Bewegens das Bewegen der Reinigungseinheit (9, 10, 11) entlang eines mäandrierenden Wegs aufweist.

## Revendications

1. Appareil (4) de positionnement et de récupération d'articles dans/depuis un système de stockage (1) comprenant une pluralité de compartiments de stockage (2) disposés en matrice, l'appareil (4) comprenant :
- un organe de positionnement/récupération (7) conçu pour positionner/récupérer un article dans/depuis un compartiment de stockage choisi (2) ;
- un moyen (6) destiné à déplacer l'organe de positionnement/récupération (7) suivant au moins deux directions indépendantes pour lui permettre d'atteindre chacun des compartiments de stockage (2) du système de stockage (1) en vue de positionner/ récupérer un articule dans/depuis un compartiment de stockage choisi (2), et
- une unité de nettoyage (9, 10, 11) comprenant un ou plusieurs organes de nettoyage et pouvant se déplacer conjointement à l'organe de positionnement/récupération (7) ;
**caractérisé en ce que** l'unité de nettoyage (9, 10, 11) est ainsi conçue pour effectuer sélectivement des opérations de nettoyage au moins à l'intérieur de chacun des multiples compartiments de stockage (2) du système de stockage (1).

2. Appareil (4) selon la revendication 1, dans lequel l'unité de nettoyage (9, 10, 11) est montée sur l'organe de positionnement/récupération (7) ou en fait partie.

3. Appareil (4) selon la revendication 1 ou 2, dans lequel le ou les organes de nettoyage est/sont choisi(s) dans le groupe comprenant : des buses fixes, des buses mobiles, des unités multi-buses, des brosses fixes, des brosses mobiles, des unités de dosage, des unités de séchage, des unités d'aspiration, des racles et des unités d'essuyage.

4. Appareil (4) selon l'une quelconque des revendications précédentes, dans lequel l'unité de nettoyage (9, 10, 11) est conçue pour effectuer simultanément des opérations de nettoyage sur deux compartiments de stockage (2) ou davantage.

5. Appareil (4) selon l'une quelconque des revendications précédentes, dans lequel l'unité de nettoyage (9, 10, 11) est démontable de l'appareil (4).

6. Système de stockage (1) comprenant une pluralité de compartiments de stockage (2) disposés en matrice et un appareil (4) selon l'une quelconque des revendications précédentes.

7. Système de stockage (1) selon la revendication 6, ledit système de stockage (1) étant conçu pour stocker des produits alimentaires.

8. Procédé de nettoyage d'un système de stockage (1) comprenant une pluralité de compartiments de stockage (2) disposés en matrice,
procédé **caractérisé en ce qu'**il comprend les étapes consistant à :
- choisir un modèle de déplacement pour une unité de nettoyage (9, 10, 11),
- choisir un modèle d'opération de nettoyage pour un ou plusieurs organes de nettoyage de l'unité de nettoyage (9, 10, 11), et
- déplacer et faire fonctionner l'unité de nettoyage (9, 10, 11) selon le modèle de déplacement et le modèle d'opération de nettoyage choisis, afin d'obtenir le type de nettoyage souhaité sur les parties choisies du système de stockage (1).

9. Procédé selon la revendication 8, dans lequel l'étape de choix d'un modèle de déplacement comprend le choix d'un modèle de vitesse pour l'unité de nettoyage (9, 10, 11).

10. Procédé selon la revendication 8 ou 9, dans lequel l'étape de choix d'un modèle de déplacement comprend le choix d'un modèle conduisant l'unité de nettoyage (9, 10, 11) à passer par une pluralité de compartiments de stockage choisis (2).

11. Procédé selon la revendication 10, dans lequel l'étape de choix d'un modèle de déplacement comprend le choix d'un modèle conduisant l'unité de nettoyage (9, 10, 11) à pénétrer dans quelques uns au moins des compartiments de stockage choisis (2).

12. Procédé selon la revendication 10 ou 11, dans lequel les compartiments de stockage choisis (2) sont adjacents les uns aux autres dans la matrice.

13. Procédé selon l'une quelconque des revendications 10 à 12, dans lequel les compartiments de stockage choisis (2) forment une partie limitée du système de stockage (1).

14. Procédé selon l'une quelconque des revendications 8 à 13, dans lequel l'étape de choix d'une opération de nettoyage comprend le choix d'une ou plusieurs séquences de nettoyage à partir d'une pluralité de séquences de nettoyage.

15. Procédé selon l'une quelconque des revendications 8 à 14, dans lequel l'étape de choix d'une opération de nettoyage comprend le choix d'une ou plusieurs opérations de nettoyage dans le groupe comprenant : le type de produit de nettoyage appliqué, la quantité de produit de nettoyage appliqué, le modèle d'application d'eau, la pression de l'eau appliquée, la quantité d'eau appliquée, la température de l'eau appliquée, le séchage, le modèle de récurage, le moyen de récurage, le modèle d'aspiration et le moyen d'aspiration.

16. Procédé selon l'une quelconque des revendications 8 à 14, dans lequel l'étape de choix d'une opération de nettoyage comprend le choix d'une opération assurant le nettoyage des parties intérieures d'au moins un compartiment de stockage (2).

17. Procédé selon l'une quelconque des revendications 8 à 16, dans lequel l'étape de déplacement comprend le déplacement de l'unité de nettoyage (9, 10, 11) conjointement à un organe de positionnement/récupération (7) conçu pour positionner/récupérer un article dans/depuis un compartiment de stockage choisi (2).

18. Procédé selon l'une quelconque des revendications 8 à 17, dans lequel l'étape de déplacement comprend le déplacement de l'unité de nettoyage (9, 10, 11) suivant un itinéraire sinueux.
